(19) Europäisches Patentamt
European Patent Office
Office européen des brevets

(11) **EP 4 372 937 A1**

(12) **EUROPEAN PATENT APPLICATION**

(43) Date of publication:
**22.05.2024 Bulletin 2024/21**

(21) Application number: **22207620.0**

(22) Date of filing: **15.11.2022**

(51) International Patent Classification (IPC):
**H02H 3/28** (2006.01)     **H02H 7/04** (2006.01)
**H02H 7/045** (2006.01)     **H02H 1/04** (2006.01)

(52) Cooperative Patent Classification (CPC):
**H02H 3/28; H02H 1/046; H02H 3/283; H02H 7/045;
H02H 7/16**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hitachi Energy Ltd
8050 Zürich (CH)**

(72) Inventors:
• **WANG, Jianping
724 60 Västerås (SE)**
• **LI, YouYi
722 19 Västerås (SE)**
• **HOHN, Fabian
722 26 Västerås (SE)**

(74) Representative: **Vossius & Partner
Patentanwälte Rechtsanwälte mbB
Siebertstraße 3
81675 München (DE)**

(54) **A FAULT DISCRIMINATION AND A CURRENT TRANSFORMER SATURATION DETECTION FOR A DIFFERENTIAL PROTECTION SYSTEM**

(57)     The present disclosure relates to a method for controlling a differential protection system for an electrical power system, the method comprising: sensing at least one first current through a first end of a transmission line of the electrical power system and at least one second current through a second end of the transmission line; determining, based on the sensed at least one first current and the sensed at least one second current, a first computed current and a second computed current; determining, based on the first computed current and the second computed current, at least one parameter; determining, based on the determined at least one parameter and/or the first computed current and the second computed current, a fault in the electrical power transmission line; and controlling, based on the fault, the differential protection system. The present disclosure also relates to a respective device and system.

FIG. 1

**Description**

The present disclosure relates to a method and a device for controlling a differential protection system.

A line differential protection is widely used as a main protection for a transmission line in many applications including, e.g., windfarms, due to its high performance even in non-linear windfarm control scenarios. Conventionally, a line differential protection discriminates faults based on magnitudes and phase angles among measured quantities, in particular negative sequence components, of individual phases to enhance the security for external faults and sensitivity for internal faults. However, said discrimination method is unreliable in case of small negative sequence components, for instance due to the windfarm control. Thus, there is a need to improve the fault discrimination method and the corresponding control method for a line differential protection system.

Moreover, during an external fault, a measuring device, e.g. a current transformer (CT), may be saturated due to a highly increased flux flowing through the magnetic core. Controlling a line differential protection based on the measurements obtained while the CT is saturated, may, in turn, cause a maloperation in the line differential protection. Thus, there is a need to improve the saturation detection, in particular the CT saturation, method during an external fault and the corresponding control method for a line differential protection system.

Furthermore, a conventional line differential protection trips the corresponding device, e.g. a circuit breaker, when an internal fault is detected, but blocks, i.e. does not allow tripping, the corresponding device for a time period when an external fault is detected. Said control method poses a challenge in a fault detection and a corresponding line protection under special fault conditions. A special fault, or equivalently a complex fault, generally denotes any fault other than a simple phase-to-ground, a phase-to-phase-to-ground, a phase-to-phase-to-phase to ground, or a phase-to-phase fault. Instead, a complex fault comprises more than one fault occurring simultaneously, herein referred to as a simultaneous fault, or one fault turning into another fault after a few power frequency cycles, herein referred to as an evolving fault, a special evolving fault due to current transformer exploration, or the like. Under these special fault conditions, it is important to correctly detect faults, and the CT saturation, promptly and control the line differential protection system accordingly. Thus, there is a need to improve the fault discrimination method and the corresponding control method for a line differential protection system.

In the following, exemplary embodiments of the disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

The present disclosure relates to a method for controlling a differential protection system for an electrical power system, the method comprising: sensing at least one first current through a first end of a transmission line of the electrical power system and at least one second current through a second end of the transmission line; determining, based on the sensed at least one first current and the sensed at least one second current, a first computed current and a second computed current; determining, based on the first computed current and the second computed current, at least one parameter; determining, based on the determined at least one parameter and/or the first computed current and the second computed current, a fault in the electrical power transmission line; and controlling, based on the fault, the differential protection system.

According to an embodiment, the differential protection system is a line differential protection.

According to an embodiment, the at least one parameter is or comprises a ratio of the second computed current to the first computed current, a differential current between the first computed current and the second computed current, and/or a current sum of the first computed current and the second computed current.

According to an embodiment, the determining the fault is or comprises comparing, in particular a root-mean-square value of, the ratio and/or the differential current to a pre-set value.

According to an embodiment, the determining the fault is or comprises detecting a change in the first computed current, the second computed current value, the differential current, and/or the current sum.

According to an embodiment, first computed current, the second computed current, the ratio, and/or the differential current are root-mean-square values or sampled values.

According to an embodiment, the determined fault is an internal fault, the internal fault being a fault occurring between the first end and the second end.

According to an embodiment, the first computed current is a maximum value between an absolute sum of positive sample values of the sensed at least one first current and the sensed at least one second current, and an absolute sum of negative sample values of the sensed at least one first current and the sensed at least one second current, and wherein the second computed current is a minimum value between the absolute sum of positive sample values of the sensed at least one first current and the sensed at least one second current, and the absolute sum of negative sample values of the sensed at least one first current and the sensed at least one second current.

According to an embodiment, the method comprises detecting a current transformer saturation during an external fault in a first differential protection device located at the first end and/or in a second differential protection device located at the second end, wherein the external fault is a fault occurring outside of the first end and the second end.

According to an embodiment, the detecting the current transformer saturation during the external fault is or comprises comparing a time difference between a first time-instance and a second time-instance to a pre-set period, wherein the first time-instance is an instance of a fault occurrence, in particular an external fault, and wherein the second time-instance is determined based on the differential current.

According to an embodiment, the detecting the current transformer saturation during the external fault is or comprises comparing, in particular sampled values and/or a root-mean-square values of, the first computed current, the second computed current, the ratio, the differential current, and/or the current sum to a pre-set value.

According to an embodiment, wherein the detecting the current transformer saturation during the external fault is or comprises comparing at least two consecutive data of, in particular sampled values and/or root-mean-square values of, the first computed current, the second computed current, the ratio, the differential current, and/or the current sum to a pre-set value.

According to an embodiment, the determining the fault is or comprises determining an internal fault by iteratively comparing the differential current to a threshold value in a pre-set time window, in particular by determining whether the differential current is larger than the threshold value for a period longer than the pre-set time window, wherein the internal fault is a fault occurring within the first end and the second end.

According to an embodiment, further comprises generating, based on the determined fault, a first signal to block an operation of the first differential protection device and/or the second differential protection device.

According to an embodiment, the method further comprises generating, when a plurality of samples of the differential current are higher than a pre-set value for more than pre-set time intervals in a pre-set time window, a second signal, wherein the second signal unblocks the operation of the first differential protection device and/or the second differential protection device.

According to an embodiment, the differential protection system is or comprises a line differential protection, a shunt reactor differential protection, a capacitor bank differential protection, a busbar differential protection, or generator differential protection.

The present disclosure also relates to a device for controlling a differential protection system for an electrical power system, the device comprising a processor being configured to: determine, based on at least one first current and at least one second current, a first computed current and a second computed current; determine, based on the first computed current and the second computed current, at least one parameter; determine, based on the determined at least one parameter and/or the first computed current and the second computed current, a fault in the electrical power transmission line; and control, based on the fault, the differential protection system.

According to an embodiment, the device further comprises a sensor being configured to sense the at least one first current through a first end of a transmission line of the electrical power system.

According to an embodiment, the device further comprises a further sensor being configured to sense the at least one second current through a second end of the transmission line of the electrical power system.

According to an embodiment, the processor is configured to carry out the method of above-described embodiment.

The above and other aspects and their implementations are described in greater detail in the drawings, the descriptions, and the claims.

FIG. 1 illustrates a flow chart of the method according to an embodiment of the present disclosure.

FIG. 2a) illustrates a block diagram of a differential protection zone and the related parameters thereto used in the method according to an embodiment of the present disclosure.

FIG. 2b) illustrates an exemplary combination of exemplary criteria used in the method according to an embodiment of the present disclosure.

FIG. 2c) illustrates a table of exemplary values used in exemplary criteria according to an embodiment of the present disclosure.

FIG. 3 illustrates a fault simulation setup of the considering system according to an embodiment of the present disclosure.

FIG. 4a) and FIG. 4b) illustrate measurements obtained during an internal fault in an exemplary fault simulation setup according to an embodiment of the present disclosure.

FIG. 5 illustrates computed parameters of an exemplary criterion used in the method according to an embodiment of the present disclosure.

FIG. 6 illustrates computed parameters of an exemplary criterion used in the method according to an embodiment of the present disclosure.

FIG. 7a) illustrates computed parameters of an exemplary criterion used in the method according to an embodiment of the present disclosure and FIG. 7b) illustrates corresponding operation signals of the method according to an embodiment of the present disclosure.

FIG. 8a) illustrates computed parameters of an exemplary criterion used in the method according to an embodiment of the present disclosure and FIG. 8b) illustrates corresponding operation signals of the method according to an embodiment of the present disclosure.

FIG. 9 illustrates a computed parameter of an exemplary criterion used in the method according to an embodiment of the present disclosure.

FIG. 10 illustrates a fault simulation setup of the considering system according to an embodiment of the present disclosure.

FIG. 11a) illustrates single-phase measurements obtained during an external fault in an exemplary fault simulation set up, computed parameters therefrom, and the corresponding saturation signal according to an embodiment of the present disclosure.

FIG. 11b) illustrates an exemplary combination of exemplary criteria used in the method according to an embodiment of the present disclosure.

FIG. 11c) illustrates an exemplary combination of exemplary criteria used in the method according to an embodiment of the present disclosure.

FIG. 12a) illustrates measurements obtained during an external fault in an exemplary fault simulation setup according to an embodiment of the present disclosure.

FIG. 12b) illustrates computed parameters of exemplary criteria used in the method according to an embodiment of the present disclosure.

FIG. 13 illustrates a complex fault detection method and the corresponding line differential protection system control method according to embodiments of the present disclosure.

FIG. 14 illustrates a fault simulation setup of the considering system according to an embodiment of the present disclosure.

FIG. 15a) illustrates measurements obtained during an external fault and CT saturation in an exemplary fault simulation setup and a computed parameter therefrom according to an embodiment of the present disclosure.

FIG. 15b) illustrates measurements obtained during an evolving fault in an exemplary simulation setup and a computed parameter therefrom according to an embodiment of the present disclosure.

FIG. 15c) illustrates a flow chart of a fault type determination method according to an embodiment of the present disclosure.

FIG. 15d) illustrates single-phase measurements and a computed parameter, wherein the measurements are obtained during an evolving fault in an exemplary simulation setup according to an embodiment of the present disclosure.

FIG. 15e) illustrates corresponding operation signals of the method according to an embodiment of the present disclosure.

FIG. 16 illustrates a device according to an embodiment of the present disclosure.

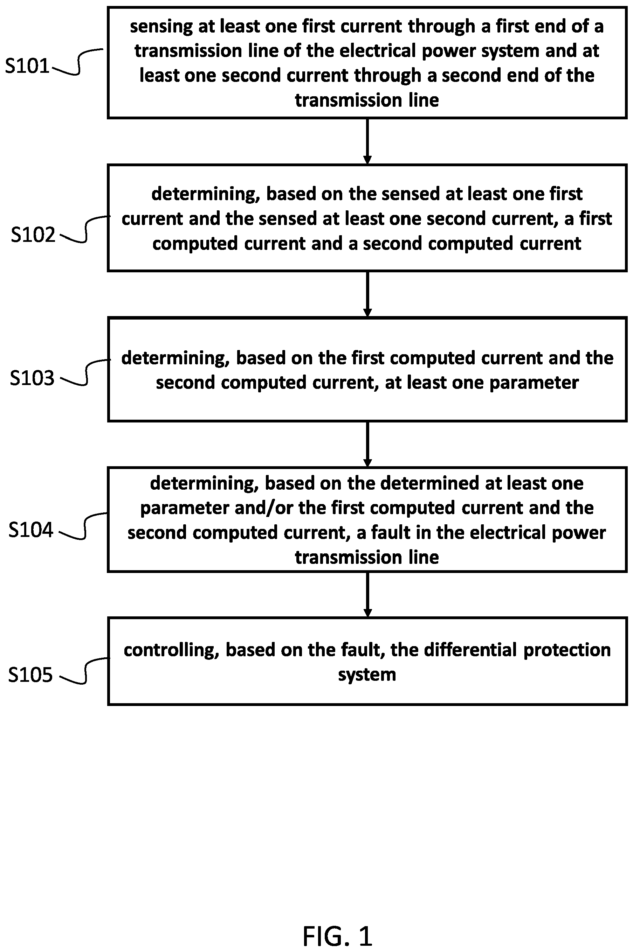

FIG. 1 illustrates a flow chart of the method according to an embodiment of the present disclosure. At S101, at least one first current through a first end of a transmission line of the electrical power system and at least one second current through a second end of the transmission line are sensed. At S102, a first computed current and a second computed current are determined based on the sensed at least one first current and the sensed at least one second current. At S103, at least one parameter is determined based on the first computed current and the second computed current. At S104, a fault in the electrical power transmission line is determined based on the determined at least one parameter and/or the first computed current and the second computed current. At S105, the differential protection system is controlled based on the fault.

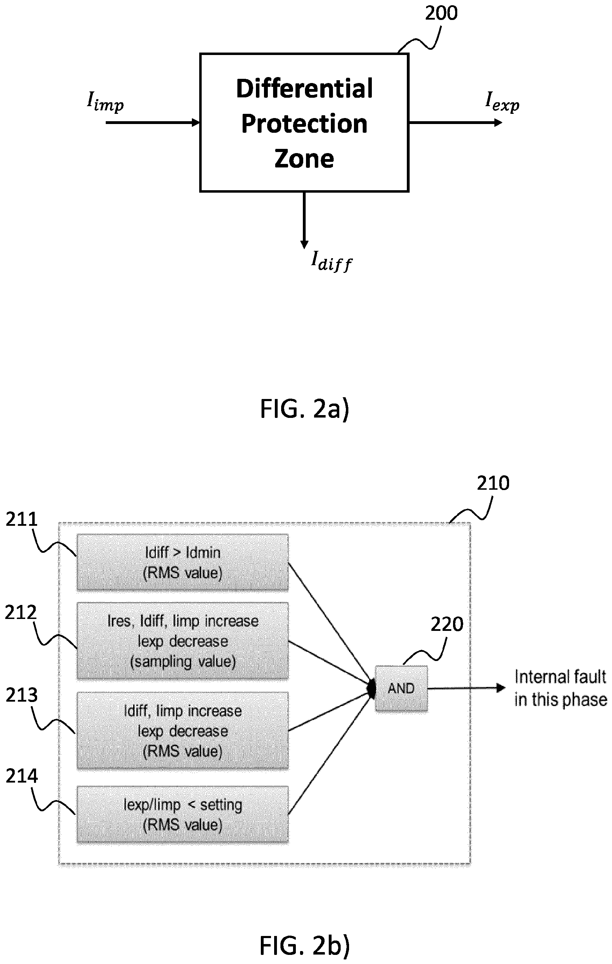

FIG. 2a) illustrates a block diagram of a differential protection zone and the related parameters thereto used in the method according to an embodiment of the present disclosure. Most power system components used in the electrical transmission systems such as transmission lines or buses can be considered as a protected object in general from power system protection point of view. An object protected by a differential protection may be considered to be within a differential protection zone 200 or may be referred to as a differential protection zone 200. In case the protected object is a transmission line, the differential protection zone 200 may be a distance between two ends of a line segment of the transmission line of an electrical power system protected by the distance protection system.

According to an embodiment, an importing current, $I_{imp}$, and an exporting current, $I_{exp}$, denote net currents flowing into and out of the differential protection zone 200, respectively.

According to an embodiment, the importing current and the exporting current are the first computed current and the second computed current of determined at S102 of FIG. 1. According to an embodiment, the importing current and the exporting current are determined as follows:

$$I_{imp} = \max\{SP, SN\} \qquad (1)$$

$$I_{exp} = \min\{SP, SN\} \qquad (2)$$

, wherein max{·} and min{·} are operators selecting the maximum and the minimum between or among inputs, respectively and $SP$ and $SN$ are defined as follows:

$$SP = \left| \sum_{j=1}^{N} I_j^+(k) \right| \qquad (3)$$

$$SN = \left| \sum_{j=n+1}^{M} I_j^-(k) \right| \qquad (4)$$

, wherein $I_j^+(k)$ and $I_j^-(k)$ denote the positive and the negative current sample of the sensed $j^{th}$ branch current sampled at the $k^{th}$ sample index, respectively, N denotes the number of branches with positive current samples, and M denotes the number of branches coupled to the protected object. That is, SP denotes summation of positive sample branch current signals and SN denotes summation of negative sample branch current signals. A differential current, $I_{diff}$, is a differential current which may be determined based on the difference between the $I_{imp}$ and the $I_{exp}$. According to an embodiment, the at least one parameter determined at S103 comprises or is the differential current. In case that the protected object is a transmission line operating under a normal load condition, the $I_{diff}$ may be a capacitive leakage current through a leakage capacitance formed by the transmission line and the electrical ground potential. It is understood by the skilled person that the capacitive leakage current may depend on the length of the transmission line and the voltage level of the transmission line (e.g. for short lines, i.e. shorter than 50km, with rated voltage below 500 kV, the capacitive leakage current can be neglected). It is further understood by the skilled person that for a busbar, the $I_{imp}$ may be the summation of all source currents feeding to the busbar and the $I_{exp}$ may be the summation of all load currents. When the capacitive current in a transmission line cannot be neglected, it is then needed to subtract the capacitive current, $I_{d,cap}$, from the importing current first so that the calculated new importing current, $I_{imp}'$, is equal to the exporting current during normal load condition as follow:

$$I'_{imp} = I_{imp} - I_{d,cap} \qquad (5)$$

. The $I_{imp}$, $I_{exp}$, and $I_{diff}$ for a short line, i.e. shorter than 50km, under various operation conditions may are summarized as follows:

- Normal load condition: $I_{imp} = I_{exp}$ & $I_{diff} \approx 0$.
- Single internal fault condition: For single fault conditions, two typical cases could be considered, that is solid ground fault condition and high impedance fault condition

    ∘ Solid ground fault condition: For the solid ground fault condition, there are two types of faults, that is, internal faults and external faults.

        ▪ Internal fault condition: In case of internal faults, the importing current will flow into the fault loop and the exporting current will be dropped to zero because the fault loop has shorted the power transmission route (voltage at the fault point is almost zero). Consequently,

$$I_{imp} = I_{diff} \ \& \ I_{exp} = 0 \ \& \ I_{diff} \approx I_{fault}$$

        , wherein $I_{fault}$ is a fault current.

        ▪ External fault condition: During external fault condition, the importing current and exporting current will increase simultaneously. The differential current will only increase in case of saturation in a measuring device. Consequently,

$$I_{imp} > I_{imp,o} \ \& \ I_{exp} > I_{exp,o} \ \& \ I_{diff} > I_{diff,o}$$

        , wherein $I_{imp,o}$, $I_{exp,o}$, and $I_{diff,o}$ denote an initial maximum importing current under normal condition, an initial maximum exporting current under normal condition, and an initial maximum differential current under normal condition, respectively.

    High impedance internal fault condition: As Importing current is the summation of differential current and exporting current, importing current will be higher than the initial maximum importing current under normal condition while the exporting current is larger than zero depending on the internal fault impedance values.

$$I_{imp} > I_{imp,o} \ \& \ I_{exp} > zero \ \& \ I_{diff} > I_{diff,o} \ \& \ I_{imp} = I_{exp} + I_{diff}$$

FIG. 2b) illustrates an exemplary combination of exemplary criteria used in the method according to an embodiment of the present disclosure. The embodiment evaluates the exemplary criteria (or equivalently conditions) 211 to 214 and combines the results thereof using an 'AND' operator 220 to determine that, if all exemplary criteria 211 to 214 are met, the fault is determined to be an internal fault in an evaluating individual phase. It is understood by the skilled person that said fault determination may be performed based on any logical combination and/or any logical hierarchy using any of said exemplary criteria. It is further understood by the skilled person that any other criteria may be used alone or in any possible combination with said exemplary criteria. According to an embodiment, a fault in the electrical power transmission line is determined at S104 of FIG. 1 according to the fault discriminator 210.

A first criterion 211 evaluates whether the $I_{diff}$, in particular root-mean-square, RMS, values, is larger than a pre-set differential threshold current, $I_{dmin}$. According to an embodiment, the first criterion evaluates the following condition:

$$I_{diff_{RMS}}(t) > I_{dmin} + K \, I_{res_{RMS}}(t) \qquad (6)$$

, wherein $K$ denotes a multiplication coefficient and $I_{diff_{RMS}}(t)$ denotes RMS of $I_{diff}$ and is defined as follows for a short time interval between t1 and t2:

$$I_{RMS} = \sqrt{\frac{1}{T} \int_{t1}^{t2} (I(t))^2 \, dt} \tag{7}$$

, wherein $T=t2-t1$ denotes a fundamental power period of the considering system (the fundamental power frequency is 50 Hz for Europe and 60 Hz for the United States, thus T= $20ms$ and $T=16.67ms$, for Europe and the United States, respectively), and $I_{res_{RMS}}$ denotes the RMS of a restrain current, $I_{res}$, which is defined as follows:

$$I_{res}(t) = \left| I_{imp}(t) \right| + \left| I_{\exp}(t) \right| \tag{8}$$

. Hereinafter, RMS values of a quantity is computed according to eq.(7), with appropriate substitution of the quantity to be determined, unless otherwise specified. It is understood by the skilled person that parameters disclosed herein represented in continuous time domain '$t$' may be represented in discrete time domain, e.g. by discrete time index '$k$', indicating measured (or equivalently sampled) values. A second criterion 212 evaluates whether $I_{res}$, $I_{diff}$, and $I_{imp}$ increase while $I_{exp}$ decreases using sampled values. According to an embodiment, said increase and decrease are evaluated with respect to initial values of said parameters obtained under normal operation. According to an embodiment, the second criterion 212 evaluates the following conditions:

$$\frac{dI_{res}(t)}{dt} > S1 \tag{9}$$

$$\frac{dI_{diff}(t)}{dt} > S1 \tag{10}$$

$$\frac{dI_{imp}(t)}{dt} > S1 \tag{11}$$

$$\frac{dI_{exp}(t)}{dt} < -S1 \tag{12}$$

, wherein $S1$ is a pre-set value. According to an embodiment, at least one of the $S1$ in eq.(7) to eq.(10) is different from one another. A third criterion 213 evaluates whether the $I_{diff}$ and the $I_{imp}$ increase while the $I_{exp}$ decrease using RMS values thereof. According to an embodiment, the increase and the decrease are evaluated with respect to initial values of said parameters obtained under normal operation. According to an embodiment, the third criterion 213 evaluates the following conditions:

$$\frac{dI_{diff_{RMS}}(t)}{dt} > S2 \tag{13}$$

$$\frac{dI_{imp_{RMS}}(t)}{dt} > S2 \tag{14}$$

$$\frac{dI_{\exp_{RMS}}(t)}{dt} < -S2 \tag{15}$$

, wherein S2 is a pre-set value. According to an embodiment, at least one of the $S2$ in eq.(11) to eq.(13) is different from one another. A fourth criterion 214 evaluates whether a ratio between the RMS value of the $I_{exp}$ and the RMS value of the $I_{imp}$ is lower than a threshold value. According to an embodiment, the at least one parameter determined at S103 of FIG.1 comprises or is the ratio between the RMS value of the $I_{exp}$ and the RMS value of the $I_{imp}$. According to an embodiment, the fourth criterion 214 evaluates the following condition:

$$\frac{I_{\exp_{RMS}}(t)}{I_{imp_{RMS}}(t)} < S3 \qquad (16)$$

. According to an embodiment, when the charging current, $I_{charging}$, is large (e.g., larger than 100 A in a 100km overhead line used in 500 kV or 1000 A for 100 km cable used in 200 kV), the fourth criterion 214 evaluates the following condition:

$$\frac{I_{\exp_{RMS}}(t) + I_{charging_{RMS}}}{I_{imp_{RMS}}(t)} < S3 \qquad (17)$$

, wherein $I_{charging_{RMS}}$ denotes RMS of the charging current. The charging current may be the line capacitance leakage current, in particular caused by the transmission line having the series resistance, inductance, and parallel conductance, capacitance. When a transmission line is energized with voltages sources, the parallel loop capacitance may be charged with charging current along the whole line even under no-load conditions. The value may be for overhead lines. For instance, an overhead line with 100 km used in 500 kV may exhibit around 100 A charging current. This charging current, compared to the total load current, for example, 1000 A as load current, may be considered small. For cable lines, the charging current may be high in comparison to the load current, because the cable capacitance may be much higher than the overhead line cases. For instance, for a 100 km cable with 220 kV length, the charging current might reach up to 1000 A. In this condition, the capacitance may not be neglected in the calculation.

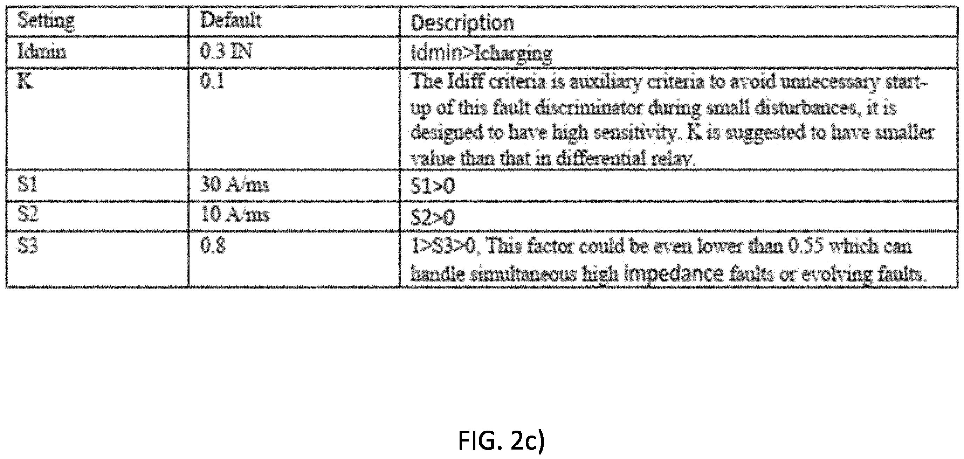

It is understood by the skilled person that the equations expressed using $t$, in particular eq.(4) through eq.(15), denoting the time in continuous time domain can be easily transferred to a discrete time domain using a sample index $k$, and thusly are exchangeable without altering the computational meaning and/or significance. According to an embodiment, $I_{charging_{RMS}}$ is a pre-set calculated charging current of the transmission line. According to an embodiment, $I_{charging_{RMS}}$ is a pre-fault measured charging current. According to an embodiment, any of the values provided in the table illustrated in FIG. 2c) are used in evaluation of any of the exemplary criteria 211 to 214. The default value of Idmin may be set to 30% of a reference current, indicated in the table of Fig. 2c) as 0.3 IN, wherein IN refers to the reference current. The reference current may be a minimum or maximum current through a transmission line or cable at which an electrical power system, in particular an equipment, a transmission line, a cable and/or devices therein, operates normally, i.e., without any malfunction and/or a fault on the transmission line or cable. The reference current may be a current through a transmission line or cable during normal operation, particularly without any malfunction and/or a fault on the transmission line or cable. It is understood by the skilled person that when at least one of the criteria 211 to 214 is not met, the line differential protection system may determine that the fault is a non-internal fault. According to an embodiment, the non-internal fault is equivalent to an external fault. According to an embodiment, any other method is used to determine the fault to be an external fault.

According to an embodiment, the at least one parameter is or comprises a ratio of the second computed current to the first computed current, a differential current between the first computed current and the second computed current, and/or a current sum of the first computed current and the second computed current.

According to an embodiment, the determining the fault is or comprises comparing, in particular a root-mean-square value of, the ratio and/or the differential current to a pre-set value.

According to an embodiment, the determining the fault is or comprises detecting a change in the first computed current, the second computed current value, the differential current, and/or the current sum.

According to an embodiment, first computed current, the second computed current, the ratio, and/or the differential current are root-mean-square values or sampled values.

According to an embodiment, the determined fault is an internal fault, the internal fault being a fault occurring between the first end and the second end.

According to an embodiment, the first computed current is a maximum value between an absolute sum of positive sample values of the sensed at least one first current and the sensed at least one second current, and an absolute sum of negative sample values of the sensed at least one first current and the sensed at least one second current, and wherein the second computed current is a minimum value between the absolute sum of positive sample values of the sensed at least one first current and the sensed at least one second current, and the absolute sum of negative sample values of the sensed at least one first current and the sensed at least one second current.

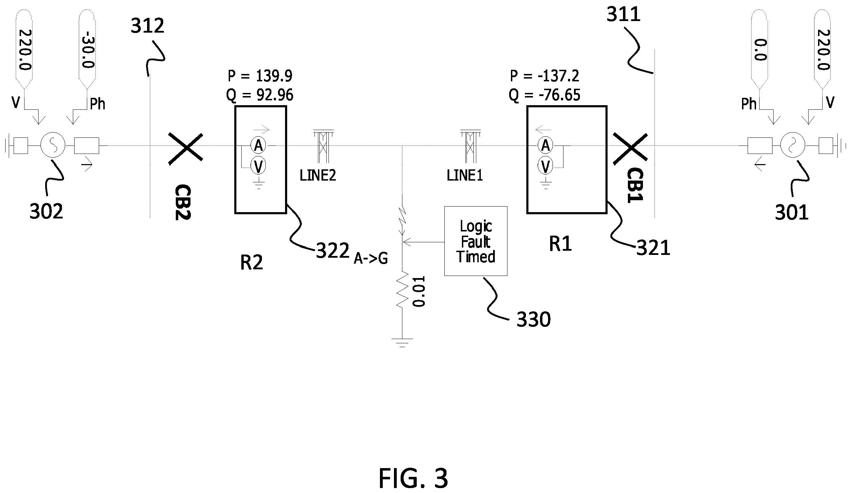

FIG. 3 illustrates a fault simulation setup of the considering system according to an embodiment of the present disclosure. The considered system comprises two voltage sources rated at 220 kV at each end of a 100 km transmission line terminated by a first terminal 311 at one end and a second terminal 312 at the other end. A first differential protection device 321 is located at a first end of the transmission line and a second differential protection device 322 is located at a second end of the transmission line. A first circuit breaker, CB1, is located on the transmission line such that, when operative, breaks the electrical connection between the first voltage source 301 and the transmission line. Particularly, the first circuit breaker is located between the first voltage source 301 and the first differential protection device 321. A second circuit breaker, CB2, is located on the transmission line such that, when operative, breaks the electrical connection between the second voltage source 302 and the transmission line. Preferably, the second circuit breaker is located between the second voltage source 302 and the second differential protection device 322. The first end and the second end are arbitrary points along the transmission line and may be or may not be defined by their respective distance to the first terminal 311 and/or the second terminal 312. The first differential protection device 321 comprises a first relay R1 measuring at least one current through the first end and voltage at the first end, and the second differential protection device 322 comprises a second relay R2 measuring at least one current through the second end and voltage at the second end. According to an embodiment, the at least one first current through the first end is an individual phase current through the first end and the at least one second current through the second end is an individual phase current through the second end. According to an embodiment, the differential protection zone 200 is the line segment of the transmission line between the first terminal 311 and the second terminal 312. The importing current, $I_{imp}$, may be determined according to eq.(1) and the exporting current, $I_{exp}$, may be determined according to eq.(2). A logic fault timer 330 generates an internal phase A-to-ground solid fault, A-G fault, at 40% of the line segment of the transmission line at 100 $ms$.

According to an embodiment, when the differential protection system determines, in particular based on the fault discriminator 210, the fault to be an internal fault in the considering phase, the differential protection system generates a signal indicating that an internal fault has occurred. According to an embodiment, the generated signal is a control signal, in particular a trip signal for the first differential protection device 321 and/or the second differential protection device 322. According to an embodiment, when the differential protection system determines the fault to be an external fault in the considering phase, the line differential protection remains stable, i.e., does not respond and maintain the operation state. According to an embodiment, when the differential protection system determines the fault to be an external fault in the considering phase, the line differential protection operates to change the operation state in case a demand for response is obtained. According to an embodiment, the first differential protection device 321 and/or the second differential protection device 322 are sending the tripping signal so that corresponding circuit breakers CB1 and CB2 are tripped, based on the generated tripping signals. In an embodiment, the determined fault is an internal fault, the internal fault being a fault occurring between the first end, in particular the first terminal 311 and the second end, in particular the second terminal 312.

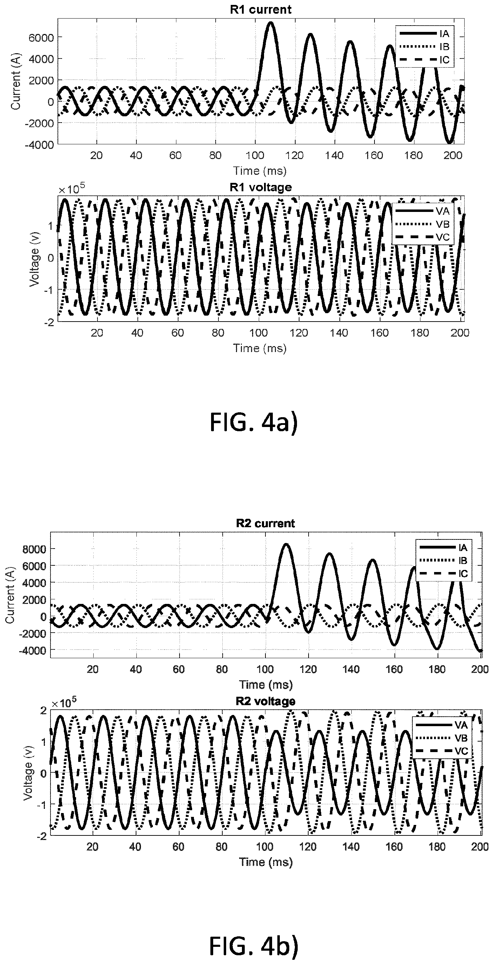

FIG. 4a) and FIG. 4b) illustrate measurements obtained during an internal fault in an exemplary fault simulation setup according to an embodiment of the present disclosure. In particular, FIG. 4a) illustrates three-phase current measurements in the upper subplot and three-phase voltage measurements in the lower subplot. According to an embodiment, the measurements are obtained using the first relay R1. FIG. 4b) illustrates three-phase current measurements in the upper subplot and three-phase voltage measurements in the lower subplot. According to an embodiment, the measurements are obtained using the second relay R2. In particular, the measurements are the simulation results based on the above-described simulation setup of FIG.3. That is, at 100 $ms$, an internal A-G fault occurs at 40% of the line segment of the transmission line. As a result, the current and the voltage of phase A at both ends of the line segment deviates from the current and the voltage of phase A obtained in the normal operation conditions.

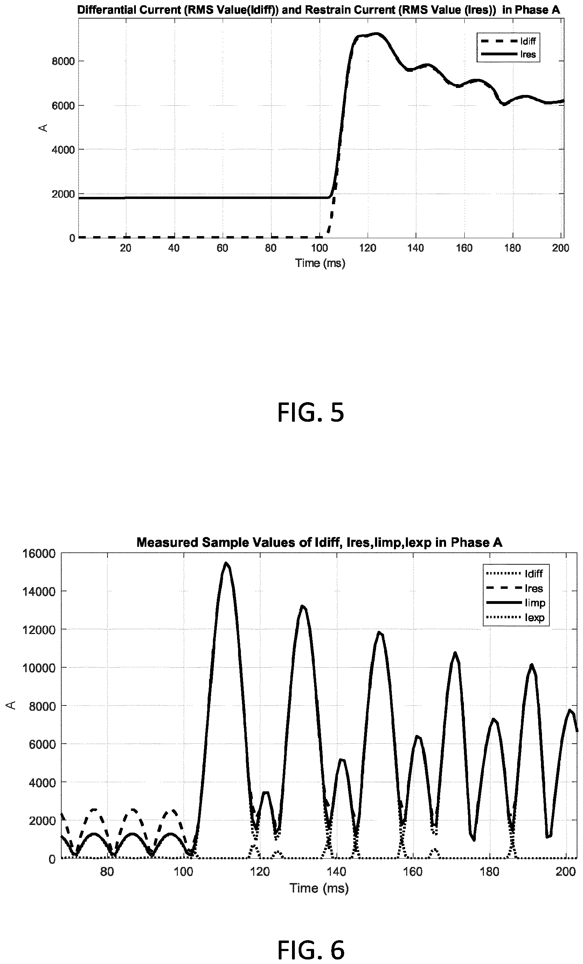

FIG. 5 illustrates computed parameters of an exemplary criterion used in the method according to an embodiment of the present disclosure. In particular, FIG. 5 illustrates the RMS of the phase-A $I_{diff}$, $I_{A,diffRMS}$, and the RMS of the phase-A $I_{res}$, $I_{A,resRMS}$, based on the measurements illustrated in FIG. 4a) and FIG. 4b). Under normal load condition the $I_{A,diff} \approx 0$, resulting in $I_{A,diffRMS} \approx 0$ and $I_{A,resRMS} \gg I_{A,diffRMS}$, until the internal A-G fault occurs at 100 $ms$, from which point $I_{A,diffRMS}$ surges and results in $I_{A,resRMS} \approx I_{A,diffRMS}$. Accordingly, the first criterion 211 may be evaluated according to eq.(5) with the values provided in FIG. 2c). Once the first criterion 211 is evaluated, the result is saved to be used in combination with results of other criteria 212 to 214 using the 'AND' operator 220.

FIG. 6 illustrates computed parameters of an exemplary criterion used in the method according to an embodiment of the present disclosure. In particular, FIG. 6 illustrates the computed phase-A $I_{diff}$, $I_{A,diff}$, the phase-A $I_{res}$, $I_{A,res}$, the phase-A $I_{imp}$, $I_{A,imp}$, and the phase-A $I_{exp}$, $I_{A,exp}$, based on the measurements illustrated in FIG. 4a) and FIG. 4b). Shortly after the internal A-G fault at 100 $ms$, the $I_{diff}$, the $I_{res}$, and the $I_{imp}$ increases drastically while the $I_{exp}$ decreases. Accordingly, the second criterion 212 may be evaluated according to eq.(9) through eq.(12) with the values provided in FIG. 2c). Once the second criterion 212 is evaluated, the result is saved to be used in combination with results of other criteria 211, 213, and 214 using the 'AND' operator 220.

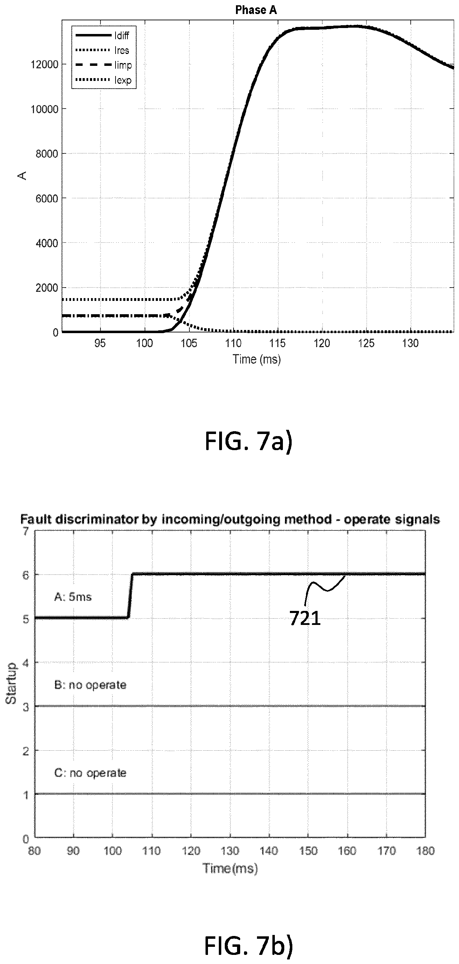

FIG. 7a) illustrates computed parameters of an exemplary criterion used in the method according to an embodiment of the present disclosure. In particular, FIG. 7a) illustrates the $I_{A,diff_{RMS}}$, the $I_{A,res_{RMS}}$, the RMS of phase-A $I_{imp}$, $I_{A,imp_{RMS}}$, and the RMS of phase-A $I_{exp}$, $I_{A,exp_{RMS}}$, based on the measurements illustrated in FIG. 4a) and FIG. 4b). The behavior of the $I_{A,res_{RMS}}$ and the $I_{A,diff_{RMS}}$ under normal load condition and after an internal A-G fault at 100 *ms* is identical to those illustrated in FIG. 5. In addition, shortly after the internal A-G fault at 100 *ms,* the $I_{A,imp_{RMS}}$ increases while the $I_{A,exp_{RMS}}$ decreases. Accordingly, the third criterion 213 may be evaluated according to eq.(13) through eq.(15) with the values provided in FIG. 2c). Once the third criterion 213 is evaluated, the result is saved to be used in combination with results of other criteria 211, 212, and 214 using the 'AND' operator 220.

FIG. 7b) illustrates corresponding operation signals of the method according to an embodiment of the present disclosure. When all of the exemplary criteria 211 to 214 are satisfied then the differential protection system determines the fault in the considering phase, in this case phase-A, to be an internal fault 5 *ms* after the internal fault occurs. Accordingly, the differential protection system generates a first signal 721 for the phase-A indicating that an internal fault has occurred. According to an embodiment, the generated first signal 721 is a control signal, in particular a trip signal for the first differential protection device 321 and/or the second differential protection device 322.

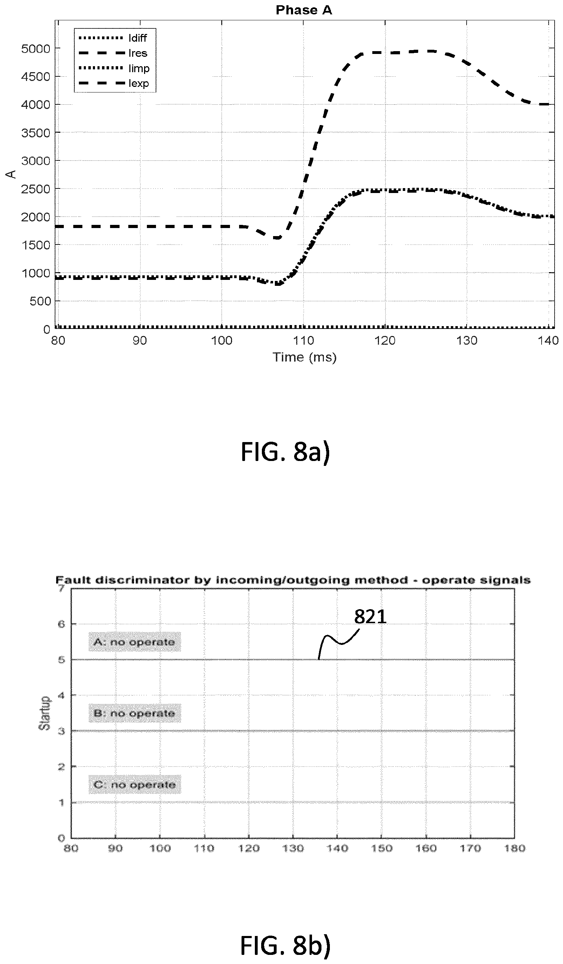

FIG. 8a) illustrates computed parameters of an exemplary criterion used in the method according to an embodiment of the present disclosure. In particular, FIG. 8a) illustrates the $I_{A,diff_{RMS}}$, , the $I_{A,res_{RMS}}$, the $I_{A,imp_{RMS}}$, and the $I_{A,exp_{RMS}}$ based on the measurements comprising measurements before and after the external A-G fault occurs at 100 *ms*. As evident from FIG. 8a), the $I_{A,diff_{RMS}}$ does not increase and the $I_{A,exp_{RMS}}$ increases in contrast to the observed dynamic changes of said currents during an internal A-G fault as illustrated in FIG. 7a). The third criterion 213 may be evaluated according to eq.(13) through eq.(15) with the values provided in FIG. 2c). In case of an external A-G fault, the third criterion 213, among others, is not satisfied. Thus, using the 'AND' operator 220, the differential protection system determines that the fault is not an internal fault accordingly and/or does not produce output signals (cf. line 821 in Fig. 8b)) to control the line differential protection devices. FIG. 8b) illustrates corresponding operation signal(s).

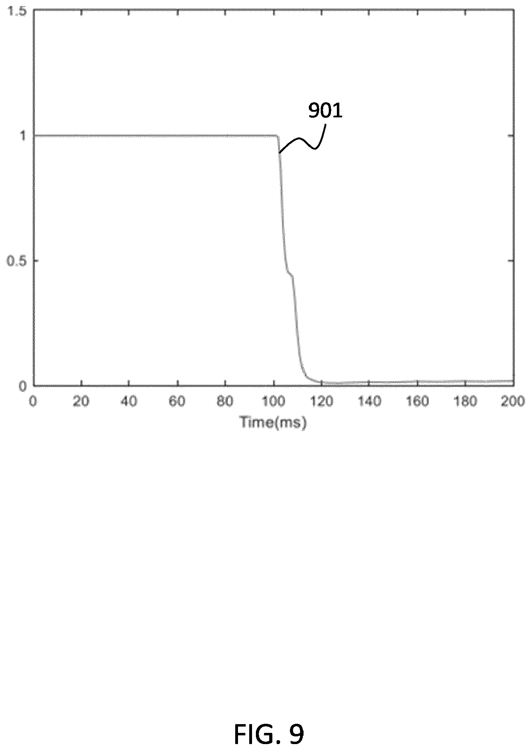

FIG. 9 illustrates a computed parameter of an exemplary criterion used in the method according to an embodiment of the present disclosure. In particular, FIG. 9 illustrates a ratio (y-axis of FIG.9) between the computed $I_{A,exp_{RMS}}$ and $I_{A,exp_{RMS}}$ based on said currents illustrated in FIG. 7a). The ratio 901 is approximately 1 under normal load condition and decreases shortly after (with a delay of about 5 *ms*) the internal A-G fault at 100 *ms.* Accordingly, the fourth criterion 214 may be evaluated according to eq.(16) with the values provided in FIG. 2c). According to an embodiment, the fourth criterion 214 can be evaluated according to eq.(17) with the values provided in FIG. 2c). Once the fourth criterion 214 is evaluated, the result is saved to be used in combination with results of other criteria 211 to 213 using the 'AND' operator 220.

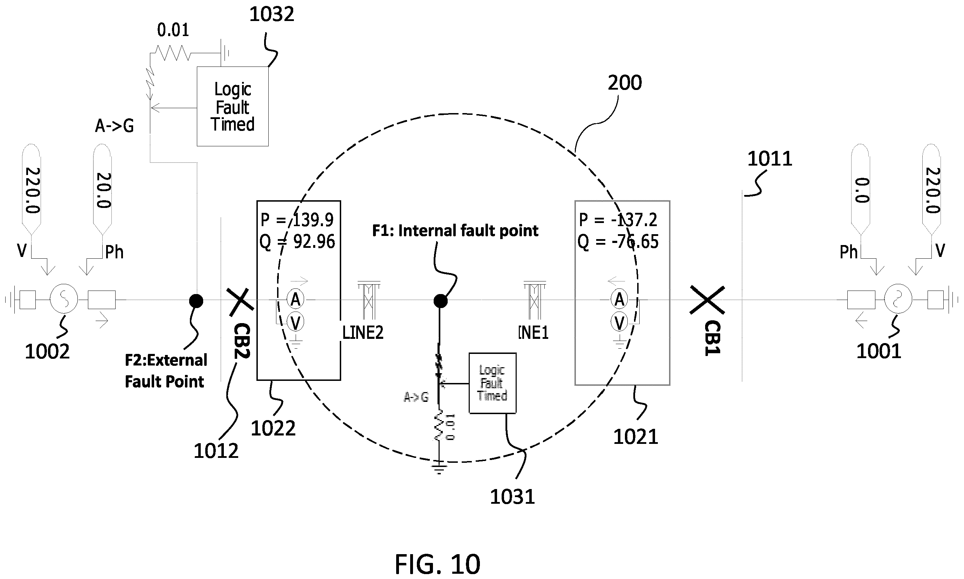

FIG. 10 illustrates a fault simulation setup of the considered system according to an embodiment of the present disclosure. The considered system comprises two voltage sources 1001 and 1002 rated at 220 kV at each end of a 100 km transmission line terminated by a first terminal 1011 at one end and a second terminal 1012 at the other end. A first differential protection device 1021 is located at a first end of the transmission line and a second differential protection device 1022 is located at a second end of the transmission line. A first circuit breaker, CB1, is located on the transmission line such that, when operative, breaks the electrical connection between the first voltage source 1001 and the transmission line. Preferably, the first circuit breaker is located between the first voltage source 301 and the first differential protection device 1021. A second circuit breaker, CB2, is located on the transmission line such that, when operative, breaks the electrical connection between the second voltage source 1002 and the transmission line. Particularly, the second circuit breaker is located between the second voltage source 1002 and the second differential protection device 1022. The first end and the second end are arbitrary points along the transmission line and may be or may not be defined by their respective distance to the first terminal 1011 and/or the second terminal 1012. The first differential protection device 1021 comprises a first relay R1 measuring at least one current through the first end and voltage at the first end, and the second differential protection device 1022 comprises a second relay R2 measuring at least one current through the second end and voltage at the second end. According to an embodiment, the at least one first current through the first end is an individual phase current through the first end and the at least one second current through the second end is an individual phase current through the second end. According to an embodiment, the differential protection zone 200 is the line segment of the transmission line between the first terminal 1011 and the second terminal 312. The importing current, $I_{imp}$, may be determined according to eq.(1) and the exporting current, $I_{exp}$, may be determined according to eq.(2). A first logic fault timer 1031 generates an internal phase A-to-ground solid fault, A-G fault, at 40% of the line segment of the transmission line, F1 in Fig. 10. A second logic fault timer 1032 generates an external phase A-to-ground solid fault, A-G fault between the second circuit breaker CB2 and the second voltage source 1002, F2 in Fig. 10.

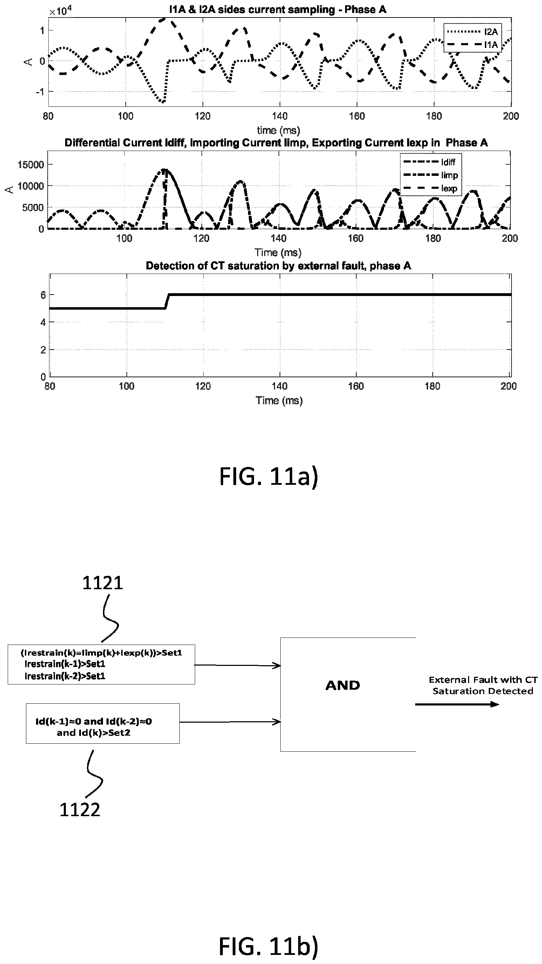

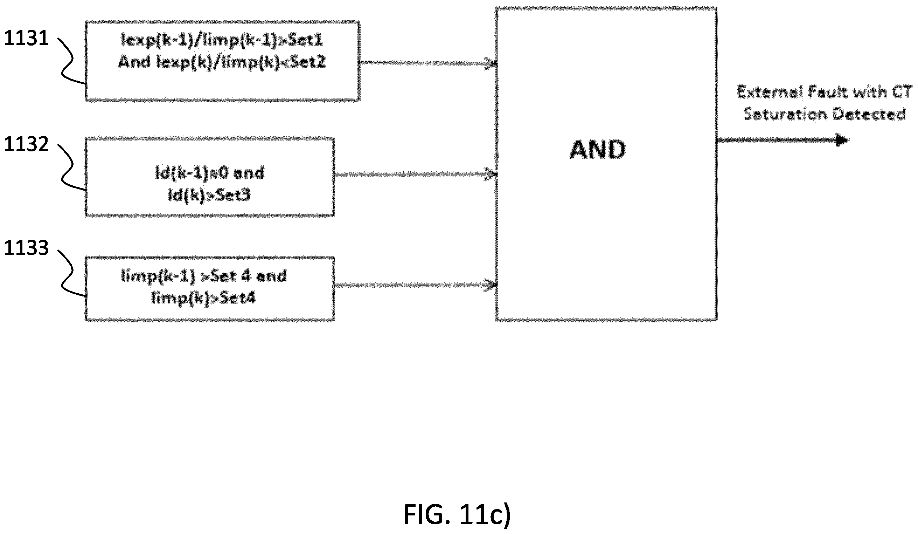

As described above, $I_{imp}$ follows $I_{exp}$ during an external fault according to Kirchhoff law when $I_{d,cap}$ of the protected transmission line can be neglected. When considering a higher capacitive leakage current condition, eq.(5) can be used. When an external fault occurs, e.g. a phase-A to ground fault, without a saturation in a measuring device (e.g. a relay, more particularly a current transformer), the $I_{imp}$ is equal to $I_{exp}$ and the $I_{diff}$ is approximately zero. In contrast, when the measuring device is saturated during the external fault, $I_{diff}$ increases during the saturation period. Such phenomenon is repeated periodically because of the measuring device (e.g. a current transformer) hysteresis characteristics. Such current behaviors are illustrated in FIG. 11.

Hereinafter, a saturation in the first line differential protection device 1021 and/or the second line differential protection device 1022 may equivalently mean the saturation in a first current transformer within the first line differential protection device 1021 and/or a second current transformer within the second line differential protection device 1022.

FIG. 11a) illustrates single-phase measurements obtained during an external fault and a measuring device being saturated in an exemplary fault simulation set up, computed parameters therefrom, and the corresponding saturation signal according to an embodiment of the present disclosure. In particular, the top subplot illustrates the phase-A current measurements using a first current transformer in the first line differential protection device 1021 and a second current transformer in the second line differential protection device 1022. The measurements are obtained within a time period, during which an external fault occurs at 100 *ms* based on the simulation setup illustrated in FIG. 10. A middle subplot illustrates the $I_{A,diff}$, the $I_{A,exp}$, and the $I_{A,imp}$ obtained within the identical time window as the measurements illustrated in the top subplot. The phase-A $I_{res}$ can be computed according to eq.(8). According to an embodiment, the phase-A $I_{res}$ can be computed as follows:

$$I_{res}(t) = I_{imp}(t) + I_{\exp}(t) \qquad (18)$$

. The phase-A $I_{res}$ increases starting from the external fault instance, regardless of the saturation in the first line differential protection device 1021. Accordingly, an external fault can be determined based on the increase in the phase-A $I_{res}$ in comparison to the phase A $I_{diff}$. According to an embodiment, the determination of an increase in the phase-A $I_{res}$ is based on the sampled values. According to an embodiment, the determination of the increase in the phase-A $I_{res}$ is based on a fifth criterion 1121 as follows:

$$I_{res}(k - 2) > I_{th,1} \; \wedge \; I_{res}(k - 1) > I_{th,1} \; \wedge \; I_{res}(k) > I_{th,1} \qquad (19)$$

, wherein the $I_{th,1}$ denotes a first threshold current. In contrary, the phase-A $I_{diff}$ only increases while the first line differential protection device 1021 is saturated. Accordingly, a saturation in the second line differential protection device 1022 can be determined based on the increase in the phase-A $I_{diff}$. According to an embodiment, the determination of an increase in the phase-A $I_{diff}$ is based on the sampled values. According to an embodiment, the determination of the increase in the phase-A $I_{diff}$ is based on a sixth criterion 1122 as follows:

$$I_{diff}(k - 2) = 0 \; \wedge \; I_{diff}(k - 1) = 0 \; \wedge \; I_{diff}(k) > I_{th,2} \qquad (20)$$

, wherein $\wedge$ denotes a logical operator 'AND' and $I_{th,2}$ denotes a second threshold current. FIG. 11b) illustrates an exemplary combination of exemplary criteria used in the method according to an embodiment of the present disclosure. When the fifth criterion 1121 and the sixth criterion 1122 are met, the line differential protection system determines that the fault is an external fault and that the first line differential protection measurement device 1021, that is, for instance, the current transformer, is saturated.

According to an embodiment, an alternative exemplary combination of exemplary criteria, as illustrated in FIG. 11c), may be used to determine the fault type to be an external fault and that the first line differential protection device 1021 and/or the second line differential protection device 1022 are saturated. A seventh criterion 1131 follows:

$$\frac{I_{exp}(k - 1)}{I_{imp}(k - 1)} > R_1 \; \wedge \; \frac{I_{exp}(k)}{I_{imp}(k)} < R_2 \qquad (21)$$

, wherein $R_1$ and $R_2$ denote a first and a second ratio, respectively. An eighth criterion 1132 follows:

$$I_{diff}(k - 1) \approx 0 \; \wedge \; I_{diff}(k) > I_{th,3} \qquad (22)$$

, wherein $I_{th,3}$ denotes a third threshold current. An nineth criterion 1133 follows:

$$I_{imp}(k-1) > I_{th,4} \; \wedge \; I_{imp}(k) > I_{th,5} \qquad (23)$$

, wherein $I_{th,4}$ and $I_{th,5}$ denote is a fourth and a fifth threshold current, respectively. When all of the seventh criterion 1131, the eighth criterion 1132, and the nineth criterion 1133 are met, the line differential protection system determines that the fault type is an external type and the first line differential protection device 1021 and/or the second line differential protection device 1022 are saturated.

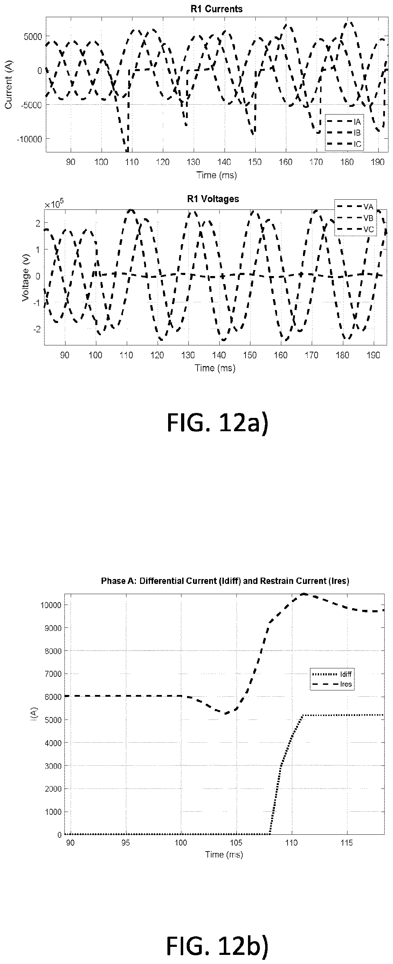

FIG. 12a) illustrates measurements obtained during an external fault in an exemplary fault simulation setup according to an embodiment of the present disclosure. In particular, a top subplot illustrates the current measurements obtained for a time period during which an external fault and the saturation in the first line differential protection device 1021 occur. A bottom subplot illustrates the corresponding voltage measurements under the same condition.

FIG. 12b) illustrates computed parameters of exemplary criteria used in the method according to an embodiment of the present disclosure. The $I_{res}$ increases from the time instance of an external fault, whereas the $I_{diff}$ increases with 6 *ms* of time delay. This may be because the line differential protection device 1021, in this case the measuring relay, in particular a current transformer, CT, require time to be saturated. Accordingly, the following time instances-based criterion can be used to determine the fault type is an external fault and the CT is saturated:

$$t_{startup,I_{diff}} - t_{startup,I_{res}} > t_{th} \qquad (24)$$

, wherein $t_{startup,I_{diff}}$, $t_{startup,I_{res}}$, and $t_{th}$ denote a time instance where the $I_{diff}$ begins to increase, a time instance where the $I_{res}$ begins to increase, and a threshold time period, respectively. When the criterion according to eq.(24) is satisfied, a first signal may be generated. According to an embodiment, said signal may block an operation of the differential protection system for a pre-set period, i.e. the line differential protection devices are disabled from tripping, herein referred to as a blocking.

The above-described saturation detection and the corresponding control method (when an internal fault is determined, at least one of the line differential protection devices is tripped and when an external fault is determined, at least one of the line differential protection devices is not tripped) can ensure the security of the line differential protection during the external faults with CT saturation. However, it is also needed to have an unblocking function to make sure that the line differential protection can trip during complex fault condition even in the presence of the saturation in the measuring device(s).

In some circumstances, a fault may not be a simple phase-to-ground, phase-to-phase-to-ground, phase-to-phase-to-phase to ground, or phase-to-phase fault. Instead, more than one fault may occur simultaneously, herein referred to as a simultaneous fault, or one fault may cause another fault to occur, herein referred to as an evolving fault. During said complex fault cases, several conditions need to be considered. Typical cases are simultaneous faults, evolving faults with fault impedance or without fault impedance. As line differential protection is naturally a phase segmented protection, it is necessary to consider the complex faults for the related phases. The simultaneous fault, for instance, may be an internal fault and an external fault occurring at the same time in a single phase. The evolving fault, for instance, may be a phase-A external fault followed by a phase-to-phase (e.g. A-to-B or A-to-C) fault or phase to phase to ground faults, as well as three phase faults vice versa. Under those complex fault conditions, current transformer(CT) may be saturated in case of solid ground faults, which in turn complicates said complex fault conditions detection even more.

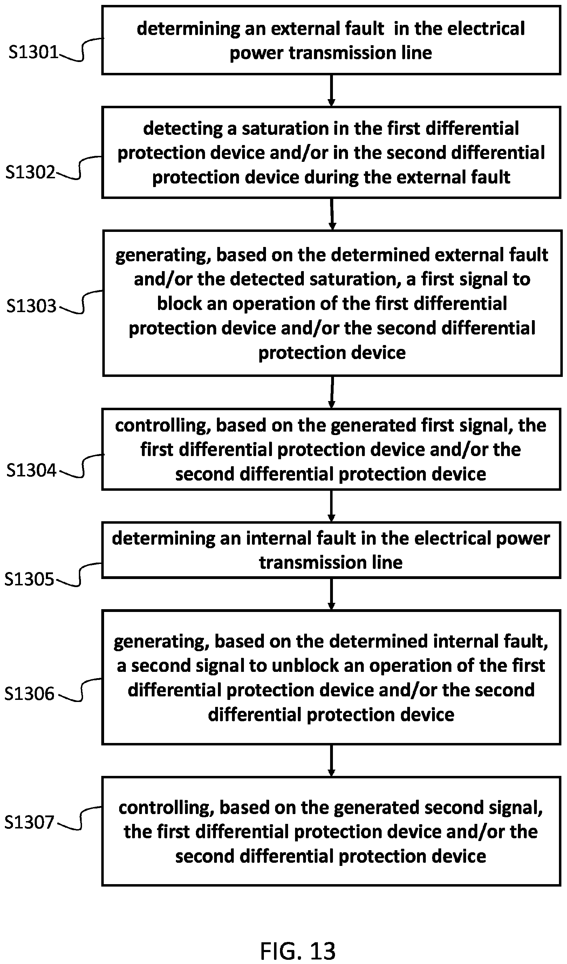

FIG. 13 illustrates a complex fault detection method and the corresponding line differential protection system control method according to embodiments of the present disclosure. At S1301 an external fault in the electrical power transmission line is determined. The external fault determined at S1301 is determined according to any one of the above-described embodiments. At S1302 a saturation in the first differential protection device and/or in the second differential protection device during the external fault is detected. The saturation detected at S1302 is detected according to any one of the above-described embodiments. According to an embodiment, the first differential protection measurement device and/or in the second differential protection measurement device is not saturated during the external fault. At S1303 a first signal to block an operation of the first differential protection device and/or the second differential protection device (i.e. the first or the second line differential protection devices are disabled from tripping, in particular for a set period) is generated based on the determined external fault and/or the detected saturation. At S1304 the first differential protection device and/or the second differential protection device is controlled based on the generated first signal. At S1305 an internal fault in the electrical power transmission line is determined. According to an embodiment, the determined internal fault is an evolved fault starting from an external fault evolving into an internal fault, in particular with a time delay. According to an embodiment, the determined internal fault is caused by an electrical disturbance different from the electrical disturbance causing the external fault detected by the block S1301. According to an embodiment, the determined internal fault is a simultaneous fault occurring at the same time as the external fault determined at S1301.

At S1306 a second signal to unblock an operation of the first differential protection device and/or the second differential protection device(i.e. the blocked first or the second line differential protection devices are re-enabled to trip) is generated based on the determined internal fault. At S1307 the first differential protection device and/or the second differential protection device is controlled based on the generated second signal.

According to an embodiment, the method comprises detecting a current transformer saturation during an external fault in a first differential protection device located at the first end and/or in a second differential protection device located at the second end, wherein the external fault is a fault occurring outside of the first end and the second end.

According to an embodiment, the detecting the current transformer saturation during the external fault is or comprises comparing a time difference between a first time-instance and a second time-instance to a pre-set period, wherein the first time-instance is an instance of a fault occurrence, in particular an external fault, and wherein the second time-instance is determined based on the differential current.

According to an embodiment, the detecting the current transformer saturation during the external fault is or comprises comparing, in particular sampled values and/or a root-mean-square values of, the first computed current, the second computed current, the ratio, the differential current, and/or the current sum to a pre-set value.

According to an embodiment, wherein the detecting the current transformer saturation during the external fault is or comprises comparing at least two consecutive data of, in particular sampled values and/or root-mean-square values of, the first computed current, the second computed current, the ratio, the differential current, and/or the current sum to a pre-set value.

According to an embodiment, the determining the fault is or comprises determining an internal fault by iteratively comparing the differential current to a threshold value in a pre-set time window, in particular by determining whether the differential current is larger than the threshold value for a period longer than the pre-set time window, wherein the internal fault is a fault occurring within the first end and the second end.

According to an embodiment, further comprises generating, based on the determined fault, a first signal to block an operation of the first differential protection device and/or the second differential protection device.

According to an embodiment, the method further comprises generating, when a plurality of samples of the differential current are higher than a pre-set value for more than pre-set time intervals in a pre-set time window, a second signal, wherein the second signal unblocks the operation of the first differential protection device and/or the second differential protection device.

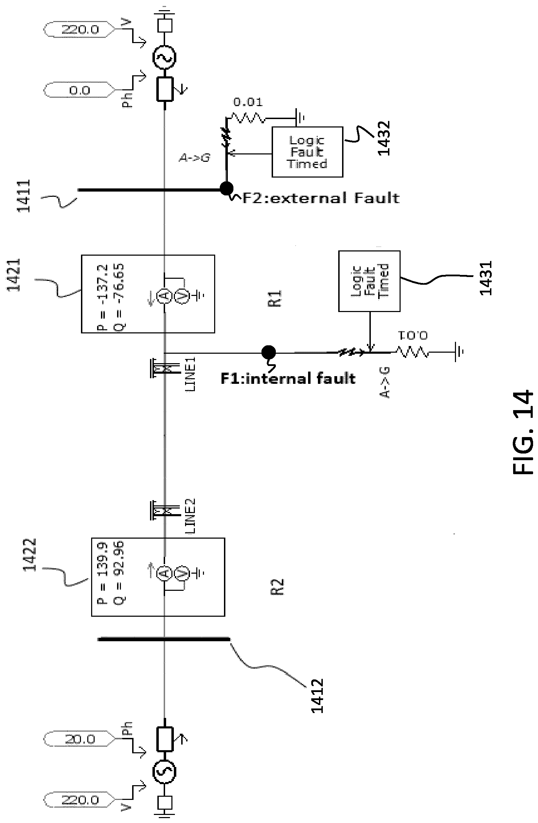

FIG. 14 illustrates a fault simulation setup of the considering system according to an embodiment of the present disclosure. In particular, said simulation setup simulates a complex fault, wherein the complex fault is or comprises a simultaneous fault, an evolving fault with fault impedance, or an evolving fault without fault impedance. The considered system comprises two voltage sources rated at 220 kV at each end of a 100 km transmission line terminated by a first terminal 1411 at one end and a second terminal 1412 at the other end. A first differential protection device 1421 is located at a first end of the transmission line and a second differential protection device 1422 is located at a second end of the transmission line. The first end and the second end are arbitrary points along the transmission line and may by or may not be defined by their respective distance to the first terminal 1411 and/or the second terminal 1412. The first differential protection device 1421 comprises a first relay R1 measuring current and voltage measurements and the second differential protection device 1422 comprises a second relay R2 measuring current and voltage measurements. According to an embodiment, the differential protection zone 200 is the line segment of the transmission line between the first terminal 1411 and the second terminal 1412. An internal fault generator 1431 generates an internal phase A-to-ground solid fault, A-G fault, at the end of line segment of the transmission line at 125 *ms.* An external fault generator 1432 generators generates an external fault at t=100 ms outside of the line segment between the first terminal 1411 and the second terminal 1412. In particular, the external fault occurs on the second terminal 1412 side of the transmission line.

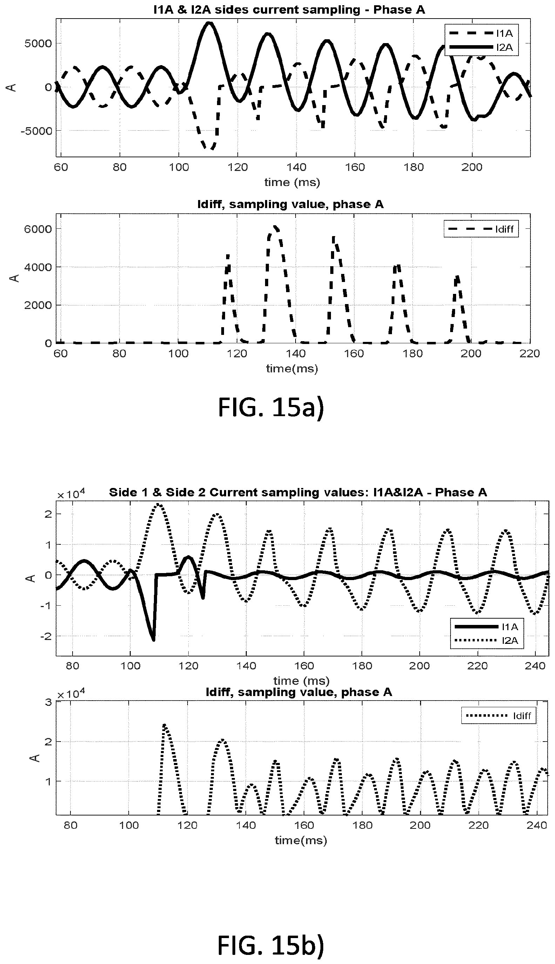

FIG. 15a) illustrates measurements obtained during an external fault and CT saturation in an exemplary fault simulation setup and a computed parameter therefrom according to an embodiment of the present disclosure. In particular, the upper subplot illustrates a phase-A current measured using the first line differential protection device 1421 and a phase-A current measured using the second line differential protection device 1422, and the bottom subplot illustrates a differential current, $I_{diff}$, between the two measured currents illustrated in the upper subplot. It is evident that $I_{diff}$ is approximately zero before the external fault at t=100 ms and increases to yield a periodic spike train as a result of the saturation in the first line differential protection device 1421.

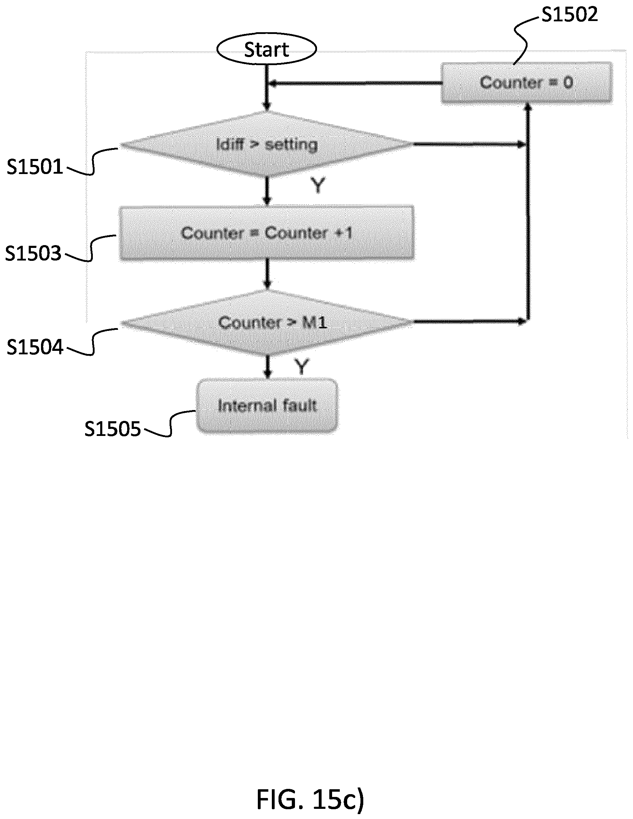

FIG. 15b) illustrates measurements obtained during an evolving fault in an exemplary simulation setup and a computed parameter therefrom according to an embodiment of the present disclosure. The upper subplot and the bottom subplot illustrate the currents of the upper subplot and the bottom subplot illustrated of FIG. 15a), respectively. The measurements illustrated in FIG. 15b) are obtained during the external fault (occurring at t=100 ms) considered in FIG. 15a) evolving into an internal fault in the same phase-A at *t=125 ms* (approximately 25ms later than the considered external fault). The measurements are obtained without tripping the first differential protection device 1421 and the second line differential protection device 1422. The considered evolving fault may lead to a maloperation in the line differential protection system when remained uncontrolled. Thus, it is important to detect such evolving fault and accordingly trip the differential protection devices to counteract. To this end, an embodiment of a counter-based method is illustrated in FIG. 15c)

FIG. 15c) illustrates a flow chart of a fault type determination method according to an embodiment of the present disclosure. In particular, the flow chart detects an evolving fault (started as an external fault and later evolve into an internal fault with a time delay) based on a counter. At least one of the measuring devices are considered to be saturated during the external fault. According to an embodiment, the at least one of the measuring devices are considered to be not saturated during the external fault. The block S1501 evaluates whether the $I_{diff}$ is larger than a threshold value. If the $I_{diff}$ is smaller than the threshold value, then the counter is reset to zero S1502. If the $I_{diff}$ is larger than the threshold value, the counter increments S1503, then checks whether the counter is larger than a threshold value 'M1' S1504. If the counter is smaller than the threshold value 'M1', then the method returns to the block S1501, in particular according to an embodiment, to evaluate a next $I_{diff}$ sample. If the counter is larger than the threshold value 'M1', the method determines that an external fault with the CT saturation has evolved into an internal fault.

The exemplary method illustrated in FIG.15c) is based on the physical phenomena that when and only when an external fault with a CT saturation occurs, the sample values of the $I_{diff}$ will be zero for some time periodically in every cycle, because the excitation curve of the CT circulates between a linear and a non-linear zone periodically in the hysteresis loop. If M1 samples of the $I_{diff}$ are larger than a threshold voltage within an N sample window, the internal fault (e.g. M1 may be number of samples corresponding to 18ms and 20ms) has occurred, because the $I_{diff}$ will be continuously available for any internal fault conditions and will not be uncontrolled.

According to an embodiment, the line differential protection system or the line differential protection devices generate a first signal based on the determined external fault and/or the detected saturation. According to an embodiment, the line differential protection devices are blocked for a pre-set period based on the first signal. According to an embodiment, the blocks S1501 to S1505 are performed during said pre-set period, during which the line differential protection devices are blocked. According to an embodiment, the line differential protection system or the line differential protection devices generate a second signal based on the determined internal fault S107. According to an embodiment, the blocked line differential protection devices are unblocked based on the first signal, i.e. the line differential protection devices are enabled to trip. According to an embodiment, the exemplary method of FIG. 15c) determines an internal fault S107 for any complex fault, in particular when a CT is not saturated.

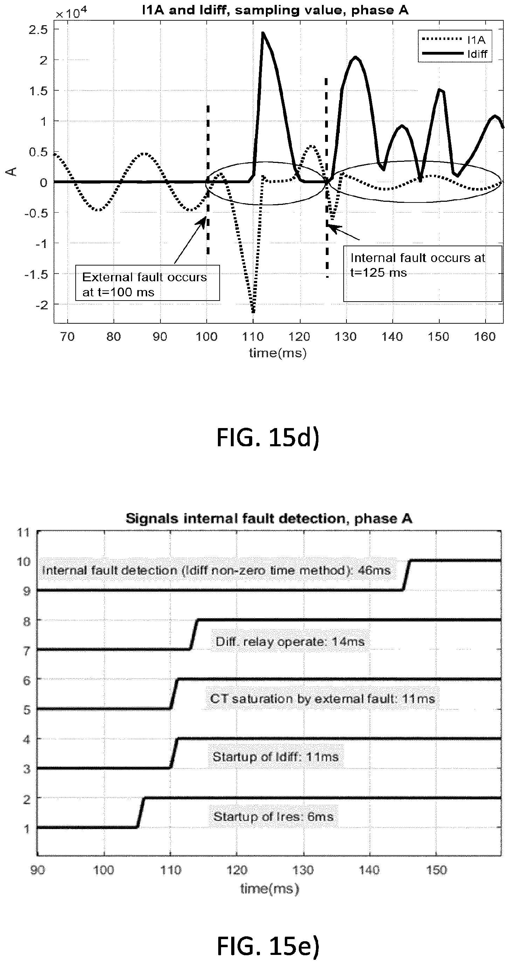

FIG. 15d) illustrates single-phase measurements and a computed parameter, wherein the measurements are obtained during an evolving fault in an exemplary simulation setup according to an embodiment of the present disclosure. In particular, the $I_{diff}$ computed based on the measurements during an evolving fault (an external fault evolving into an internal fault) is illustrated. An external fault occurs at $t=100$ ms and evolves into an internal fault occurs at $t=125$ ms. The external fault and the resulting CT saturation are detected at $t=111$ ms according to any of the above-described embodiments. According to an embodiment, the line differential protection system or the line differential protection devices generate a first signal and the line differential protection devices are blocked based on the generated first signal. Then, the consecutive increase in the $I_{diff}$ is monitored based on the evolving fault detection method illustrated in FIG. 15c). As the internal fault occurs at $t=125$ ms, the $I_{diff}$ increases consecutively for an M1 samples, leading to an internal fault determination at $t=146$ ms. According to an embodiment, the line differential protection system or the line differential protection devices generate a second signal and the line differential protection devices are unblocked based on the generated second signal. The operation signals illustrating the timing of the fault detections of FIG. 15d) are illustrated in FIG. 15e).

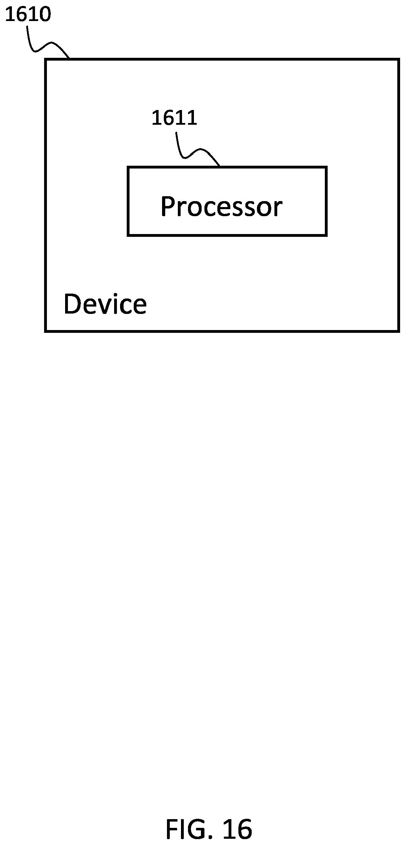

FIG. 16 illustrates a device according to an embodiment of the present disclosure. The device 1610 is a device for controlling a differential protection system for an electrical power system, the device comprising a processor being configured to: determine, based on at least one first current and at least one second current, a first computed current and a second computed current; determine, based on the first computed current and the second computed current, at least one parameter; determine, based on the determined at least one parameter and/or the first computed current and the second computed current, a fault in the electrical power transmission line; and control, based on the fault, the differential protection system.

According to an embodiment, the device further comprises a sensor being configured to sense the at least one first current through a first end of a transmission line of the electrical power system.

According to an embodiment, the device further comprises a further sensor being configured to sense the at least one second current through a second end of the transmission line of the electrical power system.

According to an embodiment, the processor is configured to carry out the method of any one of the above-described embodiments.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1. A method for controlling a differential protection system for an electrical power system, the method comprising:

   sensing at least one first current through a first end of a transmission line of the electrical power system and at least one second current through a second end of the transmission line;
   determining, based on the sensed at least one first current and the sensed at least one second current, a first computed current and a second computed current;
   determining, based on the first computed current and the second computed current, at least one parameter;
   determining, based on the determined at least one parameter and/or the first computed current and the second computed current, a fault in the electrical power transmission line; and
   controlling, based on the fault, the differential protection system.

2. The method of claim 1, wherein the at least one parameter is or comprises a ratio of the second computed current to the first computed current, a differential current between the first computed current and the second computed current, and/or a current sum of the first computed current and the second computed current.

3. The method of claim 2, wherein the determining the fault is or comprises:

   comparing, in particular a root-mean-square value of, the ratio and/or the differential current to a pre-set value; and/or
   detecting a change in the first computed current, the second computed current value, the differential current, and/or the current sum.

4. The method of any one of claims 1 to 3, wherein the first computed current is a maximum value between an absolute sum of positive sample values of the sensed at least one first current and the sensed at least one second current, and an absolute sum of negative sample values of the sensed at least one first current and the sensed at least one second current, and wherein the second computed current is a minimum value between the absolute sum of positive sample values of the sensed at least one first current and the sensed at least one second current, and the absolute sum of negative sample values of the sensed at least one first current and the sensed at least one second current.

5. The method of any one of claims 2 to 4, further comprising detecting a current transformer saturation during an external fault in a first differential protection device located at the first end and/or in a second differential protection device located at the second end, wherein the external fault is a fault occurring outside of the first end and the second end..

6. The method of claim 5, wherein the detecting the current transformer saturation during the external fault is or comprises comparing a time difference between a first time-instance and a second time-instance to a pre-set period,

   wherein the first time-instance is an instance of a fault occurrence, in particular an external fault, and
   wherein the second time-instance is determined based on the differential current.

7. The method of claim 5 or 6, wherein the detecting the current transformer saturation during the external fault is or comprises comparing, in particular sampled values and/or a root-mean-square values of, the first computed current, the second computed current, the ratio, the differential current, and/or the current sum to a pre-set value.

8. The method of any one of claims 5 to 7, wherein the detecting the current transformer saturation during the external fault is or comprises comparing at least two consecutive data of, in particular sampled values and/or root-mean-square values of, the first computed current, the second computed current, the ratio, the differential current, and/or the current sum to a pre-set value.

9. The method of any one of claims 5 to 8, wherein the determining the fault is or comprises determining an internal fault by iteratively comparing the differential current to a threshold value in a pre-set time window, in particular by determining whether the differential current is larger than the threshold value for a period longer than the pre-set time window, wherein the internal fault is a fault occurring within the first end and the second end.

10. The method of any one of claims 1 to9, further comprising generating, based on the determined fault, a first signal to block an operation of the first differential protection device and/or the second differential protection device.

11. The method of claim 9, further comprising generating, when a plurality of samples of the differential current are higher than a pre-set value for more than pre-set time intervals in a pre-set time window, a second signal, wherein the second signal unblocks the operation of the first differential protection device and/or the second differential protection device.

12. The method of any one of claims 1 to 11, wherein the differential protection system is or comprises a line differential protection, a shunt reactor differential protection, a capacitor bank differential protection, a busbar differential protection, or generator differential protection.

13. A device for controlling a differential protection system for an electrical power system, the device comprising a processor being configured to:

   determine, based on at least one first current and at least one second current, a first computed current and a second computed current;
   determine, based on the first computed current and the second computed current, at least one parameter;
   determine, based on the determined at least one parameter and/or the first computed current and the second computed current, a fault in the electrical power transmission line; and
   control, based on the fault, the differential protection system.

14. The device of claim 13, further comprising a sensor being configured to sense the at least one first current through a first end of a transmission line of the electrical power system; and/or a further sensor being configured to sense the at least one second current through a second end of the transmission line of the electrical power system.

15. The device of claim 13 or 14, wherein the processor is configured to carry out the method of any one of claims 2 to 12.

S101 ——
sensing at least one first current through a first end of a transmission line of the electrical power system and at least one second current through a second end of the transmission line

S102 ——
determining, based on the sensed at least one first current and the sensed at least one second current, a first computed current and a second computed current

S103 ——
determining, based on the first computed current and the second computed current, at least one parameter

S104 ——
determining, based on the determined at least one parameter and/or the first computed current and the second computed current, a fault in the electrical power transmission line

S105 ——
controlling, based on the fault, the differential protection system

FIG. 1

200

**Differential Protection Zone**

$I_{imp}$

$I_{exp}$

$I_{diff}$

## FIG. 2a)

210

211

| Idiff > Idmin (RMS value) |

212

| Ires, Idiff, Iimp increase Iexp decrease (sampling value) |

213

| Idiff, Iimp increase Iexp decrease (RMS value) |

214

| Iexp/Iimp < setting (RMS value) |

220

AND

Internal fault in this phase

## FIG. 2b)

| Setting | Default | Description |
|---------|---------|-------------|
| Idmin | 0.3 IN | Idmin>Icharging |
| K | 0.1 | The Idiff criteria is auxiliary criteria to avoid unnecessary start-up of this fault discriminator during small disturbances, it is designed to have high sensitivity. K is suggested to have smaller value than that in differential relay. |
| S1 | 30 A/ms | S1>0 |
| S2 | 10 A/ms | S2>0 |
| S3 | 0.8 | 1>S3>0, This factor could be even lower than 0.55 which can handle simultaneous high impedance faults or evolving faults. |

FIG. 2c)

FIG. 3

FIG. 4a)

FIG. 4b)

Differantial Current (RMS Value(Idiff)) and Restrain Current (RMS Value (Ires))  in Phase A

FIG. 5

Measured Sample Values of Idiff, Ires,Iimp,Iexp in Phase A

FIG. 6

FIG. 7a)

FIG. 7b)

**Phase A**

FIG. 8a)

**Fault discriminator by incoming/outgoing method - operate signals**

FIG. 8b)

FIG. 9

FIG. 10

FIG. 11a)

1121

(Irestrain(k)=Iimp(k)+Iexp(k))>Set1
Irestrain(k-1)>Set1
Irestrain(k-2)>Set1

Id(k-1)≈0 and Id(k-2)≈0
and Id(k)>Set2

1122

**AND**

External Fault with CT
Saturation Detected

FIG. 11b)

| 1131 | Iexp(k-1)/Iimp(k-1)>Set1<br>And Iexp(k)/Iimp(k)<Set2 |
| 1132 | Id(k-1)≈0 and<br>Id(k)>Set3 |
| 1133 | Iimp(k-1) >Set 4 and<br>Iimp(k)>Set4 |

AND → External Fault with CT Saturation Detected

FIG. 11c)

FIG. 12a)

FIG. 12b)

S1301 — determining an external fault in the electrical power transmission line

S1302 — detecting a saturation in the first differential protection device and/or in the second differential protection device during the external fault

S1303 — generating, based on the determined external fault and/or the detected saturation, a first signal to block an operation of the first differential protection device and/or the second differential protection device

S1304 — controlling, based on the generated first signal, the first differential protection device and/or the second differential protection device

S1305 — determining an internal fault in the electrical power transmission line

S1306 — generating, based on the determined internal fault, a second signal to unblock an operation of the first differential protection device and/or the second differential protection device

S1307 — controlling, based on the generated second signal, the first differential protection device and/or the second differential protection device

FIG. 13

FIG. 14

FIG. 15a)

FIG. 15b)

FIG. 15c)

FIG. 15d)

FIG. 15e)

1610

1611

Processor

Device

FIG. 16

Europäisches
Patentamt

European
Patent Office

Office européen
des brevets

# EUROPEAN SEARCH REPORT

Application Number

EP 22 20 7620

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SE 1 750 868 A1 (ABB SCHWEIZ AG [CH]) 3 July 2017 (2017-07-03) * line 5 - page 3, line 25 * * page 4, line 15 - page 6, line 19 * ----- | 1-4, 12-15 | INV. H02H3/28 H02H7/04 H02H7/045 H02H1/04 |
| X | WO 01/43253 A2 (SCHWEITZER ENGINEERING LAB INC [US]) 14 June 2001 (2001-06-14) | 1-5, 7-10, 12-15 | |
| A | * abstract * * page 1, lines 7-11 * * page 3, lines 21-34 * * page 5, line 34 - page 9, line 26; figures 1-5 * ----- | 11 | |
| X | JP H03 215115 A (FUJI ELECTRIC CO LTD) 20 September 1991 (1991-09-20) | 1-10, 12-15 | |
| A | * the whole document * ----- | 11 | |

TECHNICAL FIELDS SEARCHED (IPC)

H02H

The present search report has been drawn up for all claims

| Place of search | Date of completion of the search | Examiner |
|---|---|---|
| Munich | 5 May 2023 | Palukova, Mila |

EPO FORM 1503 03.82 (P04C01)

EP 4 372 937 A1

## ANNEX TO THE EUROPEAN SEARCH REPORT
## ON EUROPEAN PATENT APPLICATION NO.

EP 22 20 7620

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2023

| Patent document cited in search report | | Publication date | Patent family member(s) | | Publication date |
|---|---|---|---|---|---|
| SE 1750868 | A1 | 03-07-2017 | NONE | | |
| WO 0143253 | A2 | 14-06-2001 | AU | 4507601 A | 18-06-2001 |
| | | | BR | 0016038 A | 23-07-2002 |
| | | | CA | 2393170 A1 | 14-06-2001 |
| | | | CN | 1402900 A | 12-03-2003 |
| | | | EP | 1234366 A2 | 28-08-2002 |
| | | | MX | PA02005294 A | 13-12-2002 |
| | | | US | 6356421 B1 | 12-03-2002 |
| | | | WO | 0143253 A2 | 14-06-2001 |
| JP H03215115 | A | 20-09-1991 | JP | 2757230 B2 | 25-05-1998 |
| | | | JP | H03215115 A | 20-09-1991 |

EPO FORM P0459

For more details about this annex : see Official Journal of the European Patent Office, No. 12/82